Europäisches Patentamt

European Patent Office

Office européen des brevets

(11) Publication number : **0 420 148 B1**

(12) **EUROPEAN PATENT SPECIFICATION**

(45) Date of publication of patent specification :
15.12.93 Bulletin 93/50

(51) Int. Cl.⁵ : **C03B 37/014**

(21) Application number : **90118393.9**

(22) Date of filing : **25.09.90**

(54) **Furnace for production of optical fiber preform.**

Divisional application 92112265.1 filed on
25/09/90.

(30) Priority : **25.09.89 JP 246332/89
22.02.90 JP 39726/90
22.02.90 JP 39727/90**

(43) Date of publication of application :
**03.04.91 Bulletin 91/14**

(45) Publication of the grant of the patent :
**15.12.93 Bulletin 93/50**

(84) Designated Contracting States :
**DE FR GB IT**

(56) References cited :
**EP-A- 0 302 121
EP-A- 0 380 054
EP-A- 0 405 580
EP-A- 0 416 614
DE-A- 2 818 550
PATENT ABSTRACTS OF JAPAN, vol. 11, no.
53 (C-404)[2500], 19th February 1987; &
JP-A-61 215 226 (FURUKAWA ELECTRIC CO.,
LTD) 25-09-1986**

(73) Proprietor : **SUMITOMO ELECTRIC
INDUSTRIES, LTD.
5-33, Kitahama 4-chome, Chuo-ku
Osaka-shi, Osaka 541 (JP)**

(72) Inventor : **Tsuchiya, Ichiro, c/o Yokohama
Works Sumitomo
Electric Industries Limited, 1, Taya-cho
Sakae-ku,Yokohama-shi, Kanagawa-ken (JP)**
Inventor : **Saito, Masahide, c/o Yokohama
Works Sumitomo
Electric Industries Limited, 1, Taya-cho
Sakae-ku,Yokohama-shi, Kanagawa-ken (JP)**
Inventor : **Ishikawa, Shinji, c/o Yokohama
Works Sumitomo
Electric Industries Limited, 1, Taya-cho
Sakae-ku,Yokohama-shi, Kanagawa-ken (JP)**
Inventor : **Ohga, Yuichi, c/o Yokohama Works
Sumitomo
Electric Industries Limited, 1, Taya-cho
Sakae-ku,Yokohama-shi, Kanagawa-ken (JP)**
Inventor : **Kanamori, Hiroo, c/o Yokohama
Works Sumitomo
Electric Industries Limited, 1, Taya-cho
Sakae-ku,Yokohama-shi, Kanagawa-ken (JP)**

(74) Representative : **Brauns, Hans-Adolf, Dr. rer.
nat. et al
Hoffmann, Eitle & Partner Patentanwälte
Postfach 81 04 20
D-81904 München (DE)**

EP 0 420 148 B1

## Description

The present invention relates to a furnace in which a porous glass preform for an optical fiber preform is thermally treated, for example, dehydrated, doped or sintered to produce a highly pure quartz glass preform for an optical fiber.

In the production of an optical fiber preform, a porous glass preform consisting of fine quartz glass particles produced by the Vapor Phase Axial Deposition or the Outside Chemical Vapor Deposition is dehydrated, densified and vitrified. During the dehydration, the densification and/or the vitrification, fluorine is added to the glass to control a refractive index profile of the preform. A heating furnace comprising a muffle tube is used for the dehydration, the densification or the vitrification.

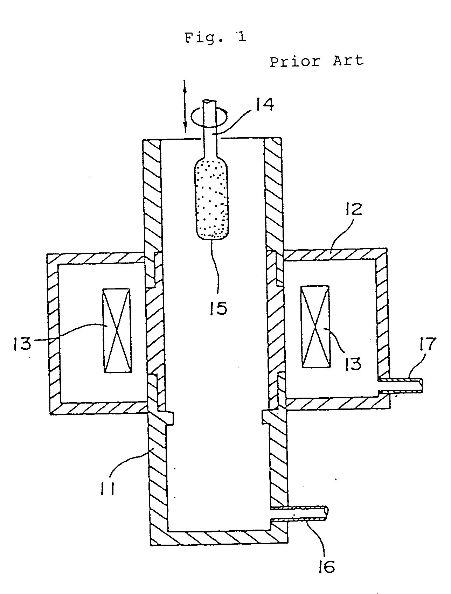

One example of such a heating furnace comprising the muffle tube is shown in Fig. 1. The conventional heating furnace comprises a hollow furnace body 12 and a muffle tube 11 which passes through the furnace body 12. A heating member 13 is placed in the furnace body 12 which has an inlet 17 for introducing an inert gas into the furnace body in order to prevent deterioration of the muffle tube, and the muffle tube 11 has an inlet 16 for introducing an atmosphere gas such as $Cl_2$, $SiF_4$ or He into the muffle tube. In the use of this heating furnace, a porous preform 15 is thermally treated by means of the heater 13 while it is suspended from a supporting rod 14.

It is known that the muffle tube is made of highly pure carbon coated with silicon carbide (hereinafter referred to as SiC).

For example, in Japanese Patent Kokai Publication No. 201634/1986, a carbon-made muffle tube coated with SiC is used, and a surface of the SiC coating is further oxidized.

Since such a muffle tube comprises carbon as a substrate, it can be kept at a high temperature without deterioration, whereby it can be heated and cooled many times with careful temperature change. In addition, the carbon substrate is hardly oxidized since it is coated with SiC so that impurities contained in the carbon substrate do not penetrate the glass preform. Because the surface of the SiC coating has been oxidized, the muffle tube does not deteriorate with $Cl_2$ or $SiF_4$.

As described above, the conventional muffle tube comprises the carbon-made substrate, a surface of which is coated with SiC and the surface of the SiC coating is oxidized.

However, it is known that there arise various difficulties during the fabrication of such a muffle tube. Firstly, conditions of the SiC coating oxidation are so sensitive that it is difficult to uniformly oxidize the SiC coating. As a result, some portions are not oxidized and/or the coating peels off due to internal stress within the oxidized SiC coating.

The oxidation of the SiC coating is carried out in an atmosphere comprising oxygen during the dehydration of or the fluorine addition to the glass preform. Alternatively, the muffle tube is baked in an oxygen atmosphere. If the SiC coating partially peels off, the carbon-made substrate of the muffle tube is severely oxidized during the oxidation step of the SiC coating, whereby the life of the muffle tube is extremely reduced.

As described above, there are severe problems during the oxidation of the SiC coating. The SiC coating rapidly deteriorated with the fluorine-containing gas when the oxidation of the SiC coating is omitted. Such deterioration begins at a temperature of 1200 °C with $SiF_4$ gas, and rapidly proceeds at a temperature above 1400 °C. As a result, the carbon-made substrate under the SiC coating is oxidized by a small amount of oxygen, whereby the life of the muffle tube is extremely shortened.

The glass preform may be densified/vitrified in an atmosphere consisting of an inert gas depending on a kind of an optical fiber which is drawn from the preform. In such case, a surface of the SiC coating is not required to be oxidized for the protection from $Cl_2$ or $SiF_4$, and then it is rather preferable to omit the oxidation step since the sensitive conditions are required. However, even in such case, the SiC coating may be oxidized with a small amount of oxygen in the muffle tube.

EP-A-0 302 121 describes a heating furnace for glass materials for optical fibers, wherein said furnace can comprise an outer muffle tube of silicon carbide and an inner cylindrical coating of highly pure carbon. Earlier application EP-A-0 380 054 discloses a furnace having a muffle tube consisting of a highly pure carbon coated with gas impermeable carbon and having an inner cylinder of either highly pure carbon or highly pure carbon coated with gas impermeable carbon. Earlier application EP-A-0 405 580 discloses a furnace having an outer tubular member consisting of gas impermeable silicon carbide. Into the outer tubular member is inserted an inner cylinder consisting of highly pure carbon coated with either carbon or carbon carbide. Earlier application EP-A- 0 416 614 discloses a furnace having an outer tubular member consisting of highly pure carbon coated with carbon. Into the outer tubular member is inserted an inner cylinder, consisting of highly pure carbon coated with carbon. The three above mentioned earlier applications fall within the terms of Article 54(3) EPC and therefore comprise the state of the art.

It is an object of the present invention to provide a furnace in which porous glass preforms can be thermally treated for a long period of time to produce highly pure quartz glass preforms for an optical fiber without decrease of strength of the optical fiber.

The present invention is directed to a furnace comprising a muffle tube made of a gas impermeable and heat resistant material, a heater in a furnace body which surrounds the muffle tube and an inner cylinder made of a heat resistant material which is detachably fitted inside the muffle tube near the heater for a thermal treatment of a quartz glass preform by inserting the preform in the muffle tube, wherein said muffle tube comprises as a material either (a) highly pure carbon coated with gas impermeable silicon carbide, or (b) sintered silicon carbide coated with gas impermeable silicon carbide, and said inner cylinder comprises as a material (1) highly pure carbon, (2) highly pure carbon coated with gas impermeable silicon carbide, or (3) highly pure carbon coated with gas impermeable carbon.

Fig. 1 schematically shows a cross-sectional configuration of a conventional heating furnace, and

Fig. 2 schematically shows a cross-sectional configuration of one embodiment of the present furnace.

The porous glass preform made of quartz is thermally treated with the heater in the muffle tube in the furnace body. During such treatment, a small amount of oxygen and/or water in the muffle tube firstly reacts with a material of the inner cylinder which is fitted inside the muffle tube and near the heater. Therefore, the water and the oxygen do not directly react with the muffle tube to deteriorate it.

The present invention will be, hereinafter, explained in detail with reference to the accompanying drawings. Members which are substantially the same as those of the conventional furnace are given the same numerical numbers as in the conventional furnace, and detailed explanations which are the same as those on the conventional furnace are neglected.

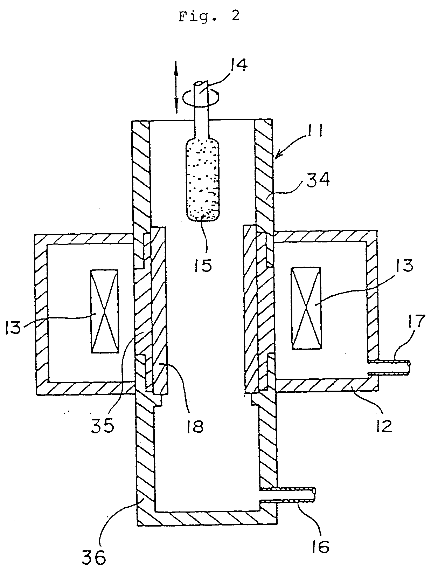

In the embodiment shown in Fig. 2, an inner cylinder 18 is detachably fitted inside a muffle tube 11 near a heater 13. In this embodiment, the muffle tube 11 is made of highly pure carbon coated with gas impermeable SiC. The muffle tube may be made of sintered silicon carbide coated with gas impermeable SiC. At least an inner surface of the muffle tube is coated with SiC. Both surfaces, of course, may be coated with SiC.

Although the inner cylinder 18 is made of highly pure carbon in this embodiment, at least an inner surface of the inner cylinder is coated with gas impermeable SiC.

The porous glass preform 15 is thermally treated, for example, dehydrated, fluorine-added and/or sintered with the heater 13 in an atmosphere comprising a gas such as $SiCl_4$, $SiF_4$ or He supplied through an inlet 16 in the muffle tube 11. During the treatment, a trace amount of oxygen and water adsorbed in the quartz made porous glass preform 15 is liberated into the atmosphere in the muffle tube 11.

In the case where the conventional furnace without the inner cylinder 18 is used, the following reaction proceeds to deteriorate the SiC coating:

$$SiC + 3SiF_4 + 1/2O_2 \rightarrow 4SiF_3 + CO \qquad (1)$$

Even in the case where only the inert gas is used, the surface of the SiC coating is oxidized with oxygen in the muffle tube according to the following equation:

$$2SiC + 3O_2 \rightarrow 2SiO_2 + 2CO \qquad (2)$$

and the SiC coating may be destroyed in the worst case.

However, according to the present invention, the small amount of oxygen which reacts according to the above equation (1) or (2) firstly reacts with highly pure carbon of the inner cylinder according to the following equation (3) to be removed:

$$C + 1/2O_2 \rightarrow CO \qquad (3)$$

Thus, the deterioration does not reach the muffle tube and the muffle tube is protected.

In addition, in the case of the highly pure carbon made inner cylinder 18 coated with gas impermeable SiC, the atmosphere gas cannot penetrate the inner cylinder 18 itself during the initial term of the use, whereby the protection with the inner cylinder 18 for the SiC coating on the muffle tube 11 is further promoted.

Since the deterioration of the SiC coating according to the equation (1) is remarkable at a temperature above 1200 °C, the inner cylinder is installed so that it covers a portion of an inner surface of the muffle tube near the heater 13 which is heated to a temperature above 1200 °C.

The inner cylinder 18 gradually wears according to the equation (3) during each thermal treatment of the porous preform 15. With such wear, the muffle tube 11 and the SiC coating thereon is fully protected by means of the inner cylinder 18. Although the inner cylinder has to be replaced with a new one depending on an extent of the wear, cost reduction over replacement of the muffle tube can be realized since the inner cylinder 18 is smaller and easily fabricated in comparison with the muffle tube 11.

## Example 1

Now, experimental results will be described in below. Quartz made porous glass preforms 15 were thermally treated with using the conventional furnace as shown in Fig. 1 and the present furnace as shown in Fig.

2. Then, pure silica core single mode optical fibers were drawn from the treated preforms.

The used muffle tube 11 in each furnace was made of highly pure carbon coated with SiC, and the inner cylinder 18 was made of highly pure carbon. Temperature conditions and atmosphere gas conditions of the treatments are shown in following Table 1:

Table 1

| Treatment | Temperature | Atmosphere gas |
|---|---|---|
| Dehydration | 950–1100 °C | $SiCl_4$, He |
| F-addition | 1250–1400 °C | $SiF_4$, He |
| Sintering | 1550–1650 °C | He |

After the thermal treatments under the conditions as above with using the furnace as shown in Fig. 1, the SiC coating inside the muffle tube 11 changed its color to black in a portion which was heated to a temperature above 1200 °C, and more than 70 % of the SiC coating disappeared so that the carbon made substrate was exposed and oxidation of a portion of the exposed carbon substrate started. It was expected from these results that at most 250 quartz made porous glass preforms could be thermally treated with a single conventional muffle tube.

On the contrary, in the case where the present furnace was used, the inner surface of the inner cylinder 18 was slightly oxidized after the thermal treatments, but the SiC coating of the muffle tube was not changed at all. The pure silica single mode optical fiber drawn from the thermally treated preform with the present furnace had very low average transmission loss of 0.173 dB/km at a wavelengt of 1.55 µm.

In the case where the glass preform was thermally treated using the present furnace comprising the inner tube made of highly pure carbon, air may enter the muffle tube when the porous glass preform 15 is inserted in the inner tube, whereby the inner tube may be deteriorated due to oxidation. In order to prevent such oxidation, the insertion of the glass preform may be performed at a temperature below 400 °C or an upper portion of the muffle tube 11 may be partitioned as a front chamber.

According to the present furnace for the production of the highly pure quartz preform by the thermal treatment, a small amount of oxygen and water contained in the glass preform firstly reacts with the inner cylinder during the thermal treatment of the preform since the inner cylinder is detachably fitted inside the muffle tube. Therefore, oxygen and water do not directly deteriorate the muffle tube, whereby the life of the muffle tube is extended and the preform is suitably thermally treated.

## Claims

1. A furnace comprising a muffle tube (11) made of a gas impermeable and heat resistant material, a heater (13) in a furnace body (12) which surrounds the muffle tube (11) and an inner cylinder (18) made of a heat resistant material which is detachably fitted inside the muffle tube near the heater for thermal treatment of a quartz glass preform by inserting the preform (15) in the muffle tube, wherein said muffle tube (11) comprises as a material either
   (a) highly pure carbon coated with gas impermeable silicon carbide, or
   (b) sintered silicon carbide coated with gas impermeable silicon carbide,
   and said inner cylinder (18) comprises as a material either
   (1) highly pure carbon, or
   (2) highly pure carbon coated with gas impermeable silicon carbide, or
   (3) highly pure carbon coated with gas impermeable carbon.

## Patentansprüche

1. Ofen, umfassend ein Muffelrohr (11) aus einem gasundurchlässigen und hitzebeständigen Material, einem Heizer (13) in einem Heizkörper (12), der das Muffelrohr (11) umgibt, und einem inneren Zylinder (18) aus einem hitzebeständigen Material, der abnehmbar in das Innere des Muffelrohrs in der Nähe des Heizers eingepaßt ist, zur thermischen Behandlung eines Quarzglasvorformlings zur Einführung des Vorformlings (15) in das Muffelrohr, worin das Muffelrohr (11) als ein Material entweder

(a) hochreinen Kohlenstoff, der mit einem gasundurchlässigem Siliziumcarbid überzogen ist, oder
(b) gesintertes Siliziumcarbid, das mit einem gasundurchlässigen Siliziumcarbid überzogen ist, enthält, und

der innere Zylinder (18) als ein Material entweder

(1) hochreinen Kohlenstoff oder
(2) hochreinen Kohlenstoff, der mit einem gasundurchlässigen Siliziumcarbid überzogen ist, oder
(3) hochreinen Kohlenstoff, der mit einem gasundurchlässigen Kohlenstoff überzogen ist, enthält.

## Revendications

1. Four comprenant un tube moufle (11) fait d'une matière imperméable aux gaz et résistante à la chaleur, un élément chauffant (13) dans un corps de four (12) qui entoure le tube moufle (11) et un cylindre intérieur (18), fait d'une matière résistant à la chaleur, qui est monté de manière démontable à l'intérieur du tube moufle près de l'élément chauffant pour un traitement thermique d'une préforme en verre au quartz par introduction de la préforme (15) dans le tube moufle, dans lequel ledit tube moufle (11) est constitué comme matériau soit :

(a) de carbone de grande pureté revêtu de carbure de silicium imperméable aux gaz, soit
(b) de carbure de silicium fritté revêtu de carbure de silicium imperméable aux gaz,

et dans lequel ledit cylindre intérieur (18) est constitué comme matériau soit :

(1) de carbone de grande pureté, soit
(2) de carbone de grande pureté revêtu de carbure de silicium imperméable aux gaz, soit
(3) de carbone de grande pureté revêtu de carbone imperméable aux gaz.

Fig. 1

Prior Art

Fig. 2